# EUROPEAN PATENT APPLICATION

(11) **EP 1 631 010 A1**
(43) Date of publication of application: **01.03.2006**
(21) Application number: 05254539.9
(22) Date of filing: 20.07.2005
(51) Int. Cl.: H04L 12/28, H04Q 7/30, H04L 1/00

(54) **Transmitting by a base station information relating to parameters used in the adaptive modulation control (e.g.CQI) to a higher level device**

(30) Priority: 30.08.2004 JP 2004249982
(71) Applicant: FUJITSU LIMITED, Kawasaki-shi, Kanagawa 211-8588 (JP)
(72) Inventor: Yuuki, Shinji, Fujitsu Limited, Kawasaki-shi Kanagawa 211-8588 (JP)
(74) Representative: Hitching, Peter Matthew

(57) **Abstract**

A mobile communication system may enable the higher-level devices of a wireless base station to comprehend the trends (prediction) of adaptive modulation control performed by the wireless base station (16), which is a lower-level device. A mobile communication system wherein adaptive modulation control is executed between a mobile station (17) and a wireless base station (16) comprises a transmission processor operable to transmit information relating to parameters used in the adaptive modulation control to a higher-level device of the wireless base station (16).

## Description

This application is related to and claims priority to Japanese Application No. 2004-249982 filed August 30, 2004 in the Japanese Patent Office, the contents of which are incorporated by reference herein.

### 1. Field of the Invention

The present invention relates to a mobile communication system and wireless base station, for example, to a mobile communication system and wireless base station which use an HSDPA scheme.

### 2. Description of the Related Art

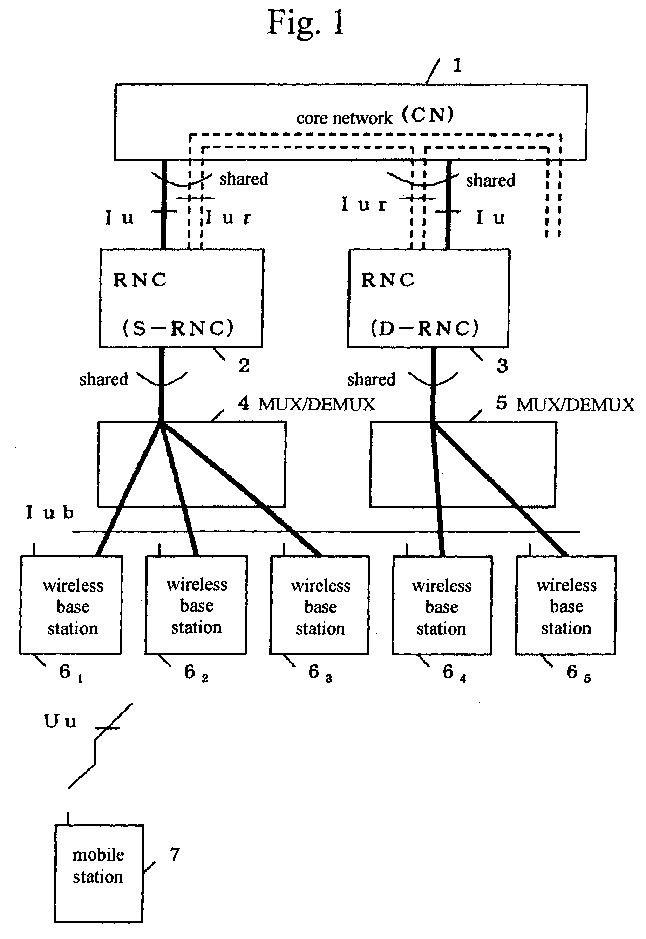

The configuration of a mobile communication system is shown in Figure 1.

Mobile communication systems which use various schemes exist, but the explanation here cites as an example a W-CDMA (UMTS) mobile communication system.

In the drawing, 1 represents a core network, 2 and 3 wireless base station controllers (RNC: radio network controllers), 4 and 5 MUX/DEMUX, 61 through 65 wireless base stations (RodeB), and 7 a mobile station (UE: user equipment).

The core network 1 is a network for routing within the mobile communication system and, for example, an ATM exchange network, packet exchange network, router network, or the like can be used to construct the core network.

The core network 1 can be connected to another public network (PSTN) or the like, and the mobile station 7 may be able to perform communication with stationary telephones or the like.

The wireless base station controllers 2 and 3 are positioned as higher-level devices of the wireless base stations 6₁ through 6₅ and a provided with the function of controlling (used wireless resource management, etc.) these wireless base stations 61 through 65. They are also provided with a handover control function, whereby, when handover occurs, a signal from one mobile station 7 is received from a plurality of wireless base stations under its control, the data having the best quality is selected in transmitted to the core network 1.

Here, the concept of the serving RNC (S-RNC) and drift RNC (D-RNC) is explained.

When a mobile station 7 makes a call or receives a call, initially the wireless base station controller which handles the processing is referred to as the serving RNC (indicated as RNC 2 in Figure 1).

Next, the mobile station 7 moves in the right-hand direction while it continues communication, moving from the wireless area formed by the wireless base station 63 under control of the serving RNC 2 to the wireless area formed by the wireless base station 64 under control of the RNC 3.

If a mobile station 7 is within the sphere of an overlap region in the wireless area, a so-called handover condition (soft handover condition) occurs, signals from the mobile station 7 are received by both wireless base stations 6₃ and 6₄, and the received signals are forwarded to the respective RNCs 2 and 3 via MUX/DEMUXs 4 and 5.

Meanwhile, when exchange of data with respect to a mobile station 7 is performed with the core network side, the RNC which serves as the link is designated as one RNC (serving RNC).

Thus, the RNC 3 forwards the received signal from the mobile station 7 to the serving RNC 2 (it may perform forwarding via the core network 1, or, if direct connecting lines are provided between RNCs 2 and 3, may forward directly via the connecting lines without passing through the core network 1).

The RNC 2, which functions as the serving RNC for the mobile station 7, chooses between a received signal from the mobile station received from the RNC 3 and a received signal from a mobile station received from a wireless base station under its control, and forwards the data on the one selected to the core network 1.

The RNC 3 is referred to as the drift RNC with respect to the serving RNC.

When handover has been completed, the wireless link between the wireless base stations 61 through 63―under control of the serving RNC 2―and the mobile station 7 is disconnected. The drift RNC 3 then forwards the received signal from the mobile station 7 to the serving RNC 2, and the serving RNC 2 hands the signal from the mobile station 7 over to the core network 1.

Of course, a similar process is used for the transmission of signals in the downlink direction (from the core network 1 to the mobile station 7): first a signal from the core network 1 to the serving RNC 2 is transmitted, and it is determined whether the serving RNC 2 controls to send a signal from the wireless base stations 6₁ through 6₃ under its own control according to conditions or forwards the signal to the drift RNC 3 to send the signal from the wireless base stations 6₄ and 6₅, under the control of the RNC 3 (in some cases transmission from both occurs).

Next, the MUX/DEMUXs 4 and 5 are arranged between the RNC and wireless base station and perform control so that signals received from RNCs 2 and 3 and addressed to each wireless base station are separated and output to each wireless base station, and signals from each wireless base station are multiplexed and forwarded to each RNC.

While the wireless base stations 6₁ through 6₃ are subject to wireless resource management by RNC 2 and wireless base stations 6₄ and 6₅ by RNC 3, they perform wireless communication with the mobile station 7.

The mobile station 7 is in territory within the wireless area of the wireless base station 6, thereby establishing a wireless link with the wireless base station 6 and perform a communication with other communication devices via the core network 1.

The interface between the core network 1 and RNCs 2 and 3 is referred to as an Iu interface, the interface between RNCs 2 and 3 as an Iur interface, the interface between RNCs 2 and 3 and the wireless base stations 6 as an Iub interface and the interface between the wireless base station 6 and the mobile station 7 as a Uu interface, and the network formed by devices 2 through 6 is referred to as a radio access network (RAN).

The link between the core network 1 and RNCs 2 and 3 is shared for Iu and Iur interface (multiple Iur interface is with multiple RNCs), and the link between the RNCs 2 and 3 and the MUX/DEMUXs 4 and 5 is shared for Iub interface for multiple wireless base stations.

The foregoing explanation concerned the general mobile communication system, but an HSDPA scheme may also be adopted as the technique which allows high speed data transmission in the downlink direction.

Here, HSDPA (High-Speed Downlink Packet Access) is briefly explained.

### • "HSDPA"

HSDPA is a system which is characterized it that it is able to switch adaptively between a QPSK modulation scheme and hexadecimal QAM scheme in accordance with the wireless environment between the base station and mobile station, using adaptive modulation and coding (AMC).

HSDPA uses an H-ARQ (Hybrid Automatic Repeat reQuest) system. In the H-ARQ system, when the mobile station detects an error in received data from a base station, it makes a retransmission request (sends an NACK signal) to that base station. The base station, upon receiving this retransmission request, resends the data, and the mobile station performs error correction decoding using both the data already received and the retransmitted received data. In this way, with H-ARQ system, even if errors exist, the data already received can be used effectively, the benefit of error correction decoding is increased, and the number of retransmissions can be held down. When an ACK signal is received from the mobile station, data transmission has been successful, so retransmission is unnecessary, and transmission of the next data is performed.

The main radio channels used in HSDPA are the HS-SCCH (High Speed-Shared Control Channel), HS-PDSCH (High Speed―Physical Downlink Shared Channel) and HS-DPCCH (High Speed-Dedicated Physical Control Channel).

The HS-SCCH and HS-PDSCH are both shared channels in the downlink direction (i.e., downlink in the direction from the base station to the mobile station), and HS-SCCH is a control channel which transmits various parameters relating to the data sent by the HS-PDSCH. In other words, it is a channel that provides notification (warning) that data transmission will be made via the HS-PDSCH.

Examples of these various parameters include information such as modulation scheme information indicating which modulation scheme was used to transmit the data by HS-PDSCH, the quota (code number) of the spreading code, and the pattern of rate matching performed with respect to the transmission data.

On the other hand, HS-DPCCH is a dedicated control channel in the uplink direction (i.e., uplink in the direction from the mobile station to the base station), and is used when the mobile station transmits to the base station respective receiving results (an ACK signal or NACK signal) in accordance with the presence or absence of errors in data received via the HS-PDSCH. Specifically, it is a channel used to transmit receiving results for data received via the HS-PDSCH. If the mobile station has failed to receive data (e.g., the received data is a CRC error), an NACK signal will be transmitted from the mobile station, so the base station will perform retransmission control.

The HS-DPCCH is used for the mobile station which has measured receiving quality (e.g., SIR) of a received signal from the base station to transmit the results thereof to the base station CQI (Channel Quality Indicator) information. The base station determines the quality of the wireless environment of the downlink direction based on the CQI information received, and if the quality is good, switches to a modulation scheme that can transmit data more quickly, while if it is poor, switches to a modulation scheme that will transmit the data more slowly (i.e., performs adaptive modulation).

### • "Channel Structure"

Next, the channel configuration in HDSPA is explained.

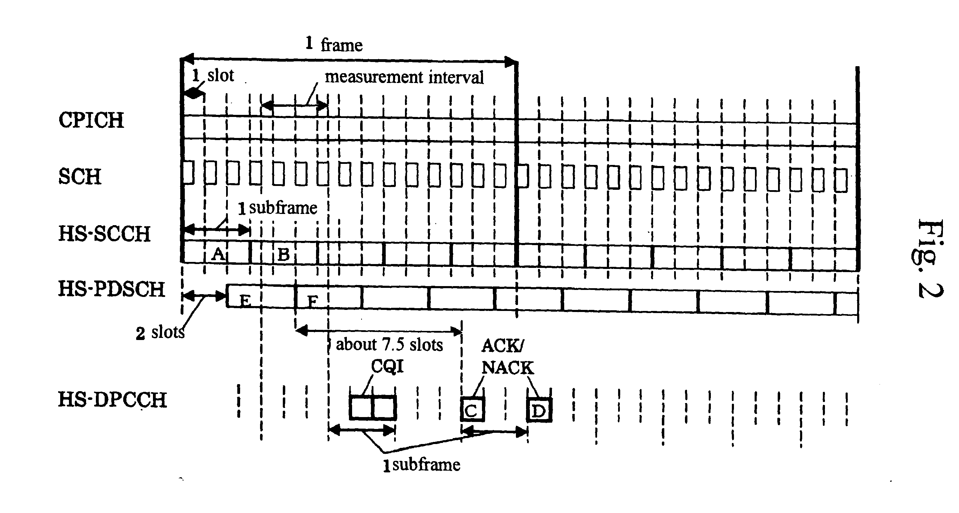

Figure 2 is a diagram showing the channel configuration in HSDPA. Since W-CDMA uses code division multiplexing, a channel is separated according to a code.

First, channels not yet discussed are briefly explained.

The CPICH (Common Pilot Channel) and SCH (Synchronization Channel) are both common downlink channels.

The CPICH is a channel used for channel estimation and cell search in the mobile station and as a timing standard for other downlink physical channels in the same cell, and is a channel for transmitting a so-called pilot signal. The SCH, strictly speaking, consists of a P-SCH (primary SCH) and S-SCH (secondary SCH), and is a channel which performs transmission in a burst state in 256 chips at the head of each slot. The SCH is received by the mobile station which performs a three-stage cell search and is used for establishing slot synchronization and frame synchronization.

Next, the channel timing relationship is described, using Figure 2.

As shown in the figure, each channel is composed of 15 slots (each slot is equivalent to the length of 2560 chips) and constitutes 1 frame (10 ms). As explained previously, since the CPICH is used as a standard for other channels, the head of the frame of the P-CCPCH and HS-SCCH corresponds to the head of the CPICH. Here, the head of the HS-PDSCH frame is delayed by 2 slots with respect to the HS-SCCH and others, but this is so that, after mobile station receives modulation scheme information via the HS-SCCH, it is able to perform the modulation of the HS-PDSCH by a demodulation scheme corresponding to the modulation scheme received. The HS-SCCH and HS-PDSCH are also composed of 1 subframe with 3 slots.

HS-DPCCH forms an uplink channel, and its first slot is used to transmit from the mobile station to the base station an ACK/NACK signal indicating the receiving results of the HS-PDSCH after about 7.5 slots have elapsed from the receipt of the HS-PDSCH. The second and third slots are used for the periodic back-transmission of CQI information to the base station for adaptive modulation control. Here, the CQI information transmitted is calculated based on the reception environment (e.g., SIR measurement results of the CPICH) measured during the interval from 4 slots to 1 slot before CQI transmission.

Matters relating to HSDPA as described above are disclosed, for example, in 3G TS 25.212 (3rd Generation Partnership Project: Technical Specification Group Radio Access Network; Multiplexing and channel coding (FDD)), and 3G TS 25.214 (3rd Generation Partnership Project: Technical Specification Group Radio Access Network; Physical layer procedures (FDD)).

In the background art explained above, the wireless base station performs adaptive modulation control by receiving information regarding the reception environment (wireless environment) from a mobile station, but this information regarding the reception environment (parameters used in adaptive modulation control) is terminated at the wireless base station.

Thus, it is desirable to enable the higher-level devices of the wireless base station to comprehend the trends (prediction) of adaptive modulation control performed by the wireless base station, which is a lower-level device.

It is also desirable to perform band control in the higher-level device based on trends (prediction) of adaptive modulation control that have been comprehended.

According to an embodiment of a first aspect of the present invention, there is provided a mobile communication system wherein adaptive modulation control is executed between a mobile station and a wireless base station, the mobile communication system being characterized in that it is provided with a transmission processor which is operable to transmit information relating to parameters used in the adaptive modulation control to a higher-level device of the wireless base station.

Preferably, a mobile communication system embodying the aforementioned first aspect of the present invention is characterized in that the adaptive modulation control is applied to signals transmitted by the wireless base station to the mobile station.

Preferably, a mobile communication system embodying the aforementioned first aspect of the present invention is characterized in that the adaptive modulation control is applied to signals transmitted by the mobile station to the wireless base station.

Preferably, a mobile communication system embodying the aforementioned first aspect of the present invention is characterized in that the information relating to parameters is information obtained by the aggregation of each parameter used in adaptive modulation control performed among a plurality of different mobile stations.

Preferably, a mobile communication system embodying the aforementioned first aspect of the present invention is characterized in that the higher-level device includes a band control part which performs band control using the parameters.

Preferably, a mobile communication system embodying the aforementioned first aspect of the present invention is characterized in that at least a MUX/DEMUX and wireless base station controller are included as the higher-level device, and in that the object of the band control is the link between the wireless base station controller and MUX/DEMUX, which is shared by a plurality of wireless base stations.

Preferably, a mobile communication system embodying the aforementioned first aspect of the present invention is characterized in that at least a plurality of wireless base station controllers and a core network are included as the higher-level device, and in that the object of the band control is the link between the plurality of wireless base station controllers via the core network and is a link shared by the plurality of wireless base station controllers.

According to an embodiment of a second aspect of the present invention, there is provided a mobile communication system which is HSDPA-compatible, the mobile communication system being characterized in that it is provided with a transmission processor which is operable to transmit CQI information received from a mobile station to a higher-level device.

Preferably, a mobile communication system embodying the aforementioned second aspect of the present invention is characterized in that it is provided with a MUX/DEMUX arranged between a plurality of wireless base stations and one RNC, and with a band controller which is operable to control bands between the RNC and the MUX/DEMUX based on the CQI information.

Preferably, a mobile communication system embodying the aforementioned second aspect of the present invention is characterized in that it is provided with a plurality of RNCs and a band controller which is operable to perform band control on an Iur interface between RNCs based on the CQI information.

According to an embodiment of a third aspect of the present invention, there is provided a mobile communication system which is HSDPA-compatible, the mobile communication system being characterized in that it is provided with a transmission processor which is operable to transmit CQI information received from a wireless base station operating under a drift RNC to a serving RNC.

Preferably, a mobile communication system embodying the aforementioned third aspect of the present invention is characterized in that the serving RNC is provided with a band controller which is operable to perform band control between the serving RNC and the drift RNC based on the received QCI information.

According to an embodiment of a fourth aspect of the present invention, there is provided a wireless base station used in an HSDPA-compatible mobile communication system, the wireless base station being characterized in that it is provided with a transmission processor which is operable to transmit QCI information received from a mobile station to a higher-level device.

According to an embodiment of a fifth aspect of the present invention, there is provided a wireless base station which is operable to measure reception quality based on received signals from a mobile station and to transmit parameters used in adaptive modulation control to the mobile station in accordance with the measurement results, the wireless base station being provided with a transmission processor which is operable to transmit information relating to the parameters to a higher-level device.

By means of embodiments of the present invention, it may be possible for an upper-level device from the wireless base station to grasp the trend (prediction) of adaptive modulation control performed by the lower-level wireless base station.

Also, it may be possible for higher-level devices to perform band control with respect to trend (prediction) of adaptive modulation control that have been comprehended.

Reference will now be made, by way of example, to the accompanying drawings, in which:
Fig. I is a diagram showing a mobile communication system.
Fig. 2 is a diagram showing a channel configuration in HSDPA.
Fig. 3 is a diagram showing a mobile communication system according to an embodiment of the present invention.
Fig. 4 is a diagram showing a wireless base station controller according to an embodiment of the present invention.
Fig. 5 is a diagram showing a MUX/DEMUX according to an embodiment of the present invention.
Fig. 6 is a diagram showing a wireless base station according to an embodiment of the present invention.
Fig. 7 is a diagram showing a mobile station according to an embodiment of the present invention.
Fig. 8 is a diagram showing a CQI table.
Fig. 9 is a diagram showing the band control between a wireless base station controller and a MUX/DEMUX.
Fig. 10 is a diagram showing the band control sequence between a wireless base station controller and a MUX/DEMUX.
Fig. 11 is a diagram showing band control between an RNC and a MUX/DEMUX.
Fig. 12 is a diagram showing a band control sequence between RNCs.

### (a) Explanation of Embodiment 1

In Embodiment 1, the wireless base station is provided with the function of transmitting to the higher-level devices information relating to parameters used in adaptive modulation control.

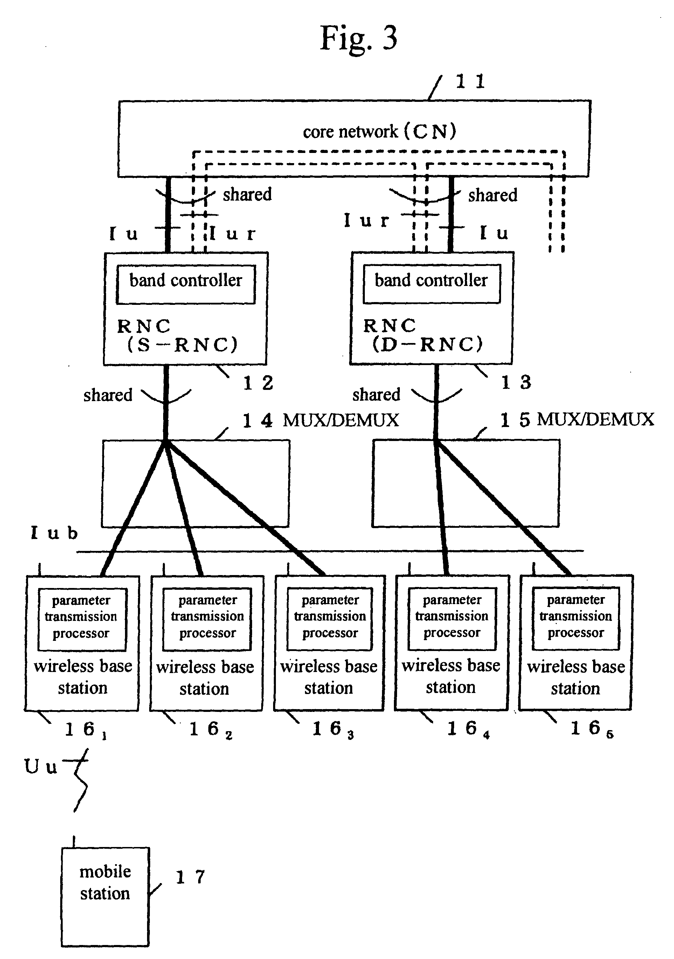

Figure 3 shows an example of the configuration of a mobile communication system according to this invention. Various types of mobile communications can be conceived, but here, as with the explanation of background technology, the explanation concerns a mobile communication system adapted to HSDPA based on a W-CDMA (UMTS) mobile communication system. Of course, the present invention also be applied to other mobile communication systems in which adaptive modulation control is performed between mobile stations and wireless base stations.

In the drawing, 11 represents a core network, 12 and 13 wireless base station controllers (RNC: radio network controllers), 14 and 15 MUX/DEMUXs, 16, through 16₅ wireless base stations (NodeB), and 17 a mobile station (UE: user equipment).

The core network 11 is a network for routing within the mobile communication system and, for example, an ATM exchange network, packet exchange network, router network or the like can be used to construct the core network.

The core network 11 is arranged as a higher-level device of the wireless base stations 16₁ through 16₅, and can be connected to another public network (PSTN) or the like, and the mobile station 17 may be able to perform communication with stationary telephones or the like.

The wireless base station controllers 12 and 13, similar to the constituent devices of the core network, arranged as a higher-level device of the wireless base stations 16₁ through 16₅ and have the function of controlling (wireless resource management, etc.) the wireless base stations 16₁ through 16₅. They are also provided with a handover control function, whereby, when handover occurs, a signal from one mobile station 17 is received from a plurality of wireless base stations under its control, the data having the best quality is selected in transmitted to the core network 11.

The concept and basic operation of these serving RNC and drift RNC are similar to those in the background art.

The MUX/DEMUXs 14 and 15 are arranged between the RNC and wireless base station and perform control so that signals received from RNCs 12 and 13 and addressed to each wireless base station are separated and output to each wireless base station, and signals from each wireless base station are multiplexed and forwarded to each RNC.

While the wireless base stations 16₁ through 16₃ are subject to wireless resource management by RNC 12 and wireless base stations 16₄ and 16₅ by RNC 13, they perform wireless communication with the mobile station 17.

The mobile station 17 is in territory within the wireless area of the wireless base station 16, thereby establishing a wireless circuit with the wireless base station 16 and perform a communication with other communication devices via the core network 11.

In this embodiment, the transmission processor of each wireless base station 16₁ through 16₅ perform a control operation which transmits CQI information as parameters for adaptive modulation control received from the mobile station 17 to the wireless base station control controllers (12 and 13) and the core network 11.

The transmitted CQI information is received by the RNC 12 (13) and core network 11 as higher-level devices.

By this means, the trends (prediction) of adaptive modulation control can be comprehended by the higher-level devices and can be used in various types of control.

Transmission based on adaptive modulation control is also performed by the mobile station 17.

In this case, the wireless base station 16 receives signals from the mobile station 17 (for example, a pilot signal which is a known signal), measuring the receiving quality (e.g., SIR), and thereby ascertains the wireless environment in the uplink direction (the direction from the mobile station to the wireless base station).

Along with regular transmission of parameters corresponding to the measured reception quality to the mobile station 17, the parameters are also regularly transmitted to the higher-level devices using the parameter transmission processor.

These parameters, for example, indicate that the SIR is high when the value is large and that the SIR is low when the value is small.

Thus, the mobile station 17 which is received parameters having a large value switches to a modulation system whereby the transmission speed of the transmitted signal is increased based on adaptive modulation control, or conversely, upon receiving parameters having a low value the mobile station 17 switches to a modulation system whereby the transmission speed of the transmitted signals is slowed based on adaptive modulation control,.

By this means, the mobile station 17 transmits wireless signals by adaptive modulation control based on the parameters received from the wireless base station 16. Since the parameters are transmitted to the wireless base station controller 12 (13), core network 11, etc. which are higher-level devices of the wireless base station 16, and thereby the wireless base station controller 12 (13), core network 11, etc., based on the parameters received, is able to grasp the trends (prediction) of adaptive modulation control in the mobile station 17 and a path that can be used in various types of control is opened.

The foregoing is an overview of the operation of mobile communication system in Embodiment 1 shown in Figure 3, but the following is a detailed explanation of the configuration in operation at each node.

### • "Wireless base station controller 12 (13)"

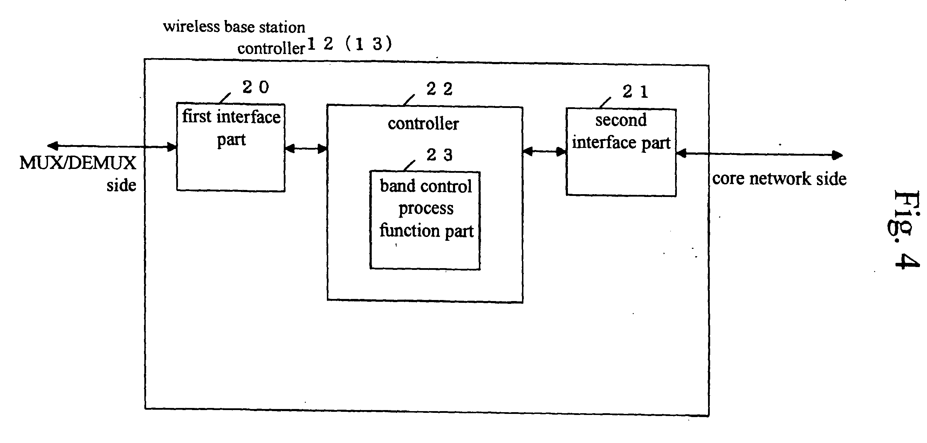

Figure 4 is a diagram showing the wireless base station controller.

In the diagram, 20 represents a first interface part for communication with the MUX/DEMUX and 21 a second interface part for communication with the core network.

Preferably, an interface part which performs transmission in accordance with an ATM scheme can be used as the first and second interface parts. Of course, transmission may also be performed using other systems.

22 represents a controller which controls the operations of each part, and which may include an RLC layer processing function whereby an RLC (Radio Link Control) layer defined under a 3GPP mobile communication system is controlled.

The controller 22 is also provided with a band control processing function part 23, which is a processing function part for performing band control.

The band regions, etc. allocated for each wireless base station, in a communication link between the MUX/DEMUX 14 (15) using a first interface 20 and the respective band regions allocated to the links (Iur) used in communication among the wireless base station controllers using the second interface part 21, and the like can be cited as objects of band control.

Next, the operation when a signal from the core network 11 is transmitted to the MUX/DEMUX 14 (15) is explained.

A controller 22 divides data obtained by the terminal processing of signals received from the core network 11 by the second interface part 21 (e.g., variable-length packet data) into fixed lengths, creating multiple RLC PDUs (packet data units).

The controller 22 then writes sequence numbers into the sequence number regions of each RLC PDU that has been divided in order to attach sequence numbers to each PDU. The sequence numbers are used to discover numbers out of sequence in the PDUs by the mobile station 17. When a number out of sequence occurs, and NACK signal is transmitted from the mobile station in order to perform retransmission control in the RLC layer. The controller 22 that has received the NACK signal retransmits the transmitted RLC PDU the mobile station 17 (the transmitted RLC PDU is stored in a memory, etc., as a duplicate).

The controller 22, which has generated the RLC PDUs, collects multiple RLC PDUs, generates a signal in a format in accordance with a HS-DSCH FP (frame protocol) provides them to the first interface part 20 and transmits it to the demultiplexers 14(15), after conversion to an ATM cell (as example).

### • "MUX/DEMUX 14 (15)"

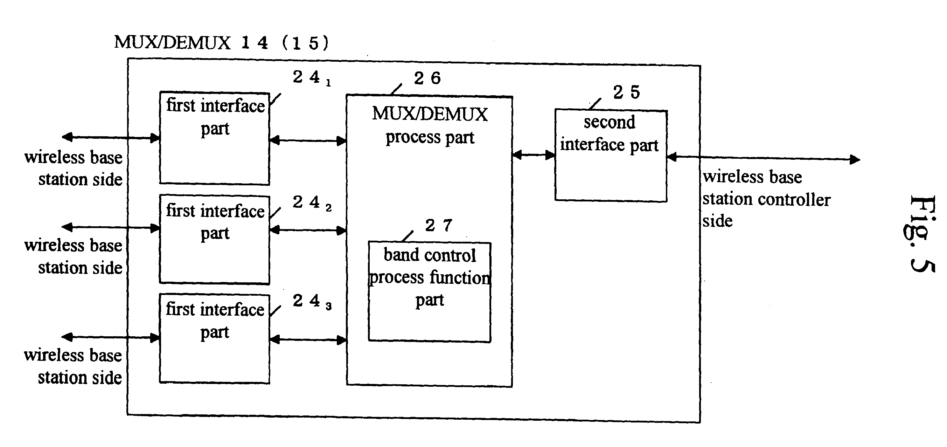

Figure 5 shows a MUX/DEMUX 14 (15).

In the drawing, 24₁ through 24₃ represent first interface parts for performing communication with the respective wireless base stations 16₁ through 16₃, and 25 indicates a second interface part for performing communication with the wireless base station controller 12 (13).

The first interface part 24 and second interface part 25 can be made units for signal transmission compatible with an ATM system similar to the first interface part 20 of the wireless base station controller 12 (13).

The capacity of the link between the second interface part 25 and first interface part 20 can be made, for example, 155 Mbps (U-Plane), and the capacity of the links between each first interface part 24 and each wireless base station can be made, for example, 1.5 Mbps (U-Plane) each.

26 indicates a MUX/DEMUX process part which performs separation processing by separating received signals from the RNC 12 (13) terminated by the second interface part 25 into multiple received signal sequences, and allocating and outputting each received signal sequence to a corresponding first interface part 24, and also performs control whereby, after multiplexing the respective received signal sequences that have been received from each first interface part 24, it sends them to the second interface part 25 and transmits them to the RNC 12 (13).

The MUX/DEMUX process part 26 includes a band control processing function part 27 which performs band control.

The band regions, etc. allocated for each wireless base station, in a communication link between the RNC 12 (13) using the second interface 25 and the respective band regions of the communication links among the wireless ground stations 16₁ through 16₃ using the respective first interface 24₁ through 24₃ and the like can be cited as objects of band control.

### • "Wireless base stations 16₁ through 16₅"

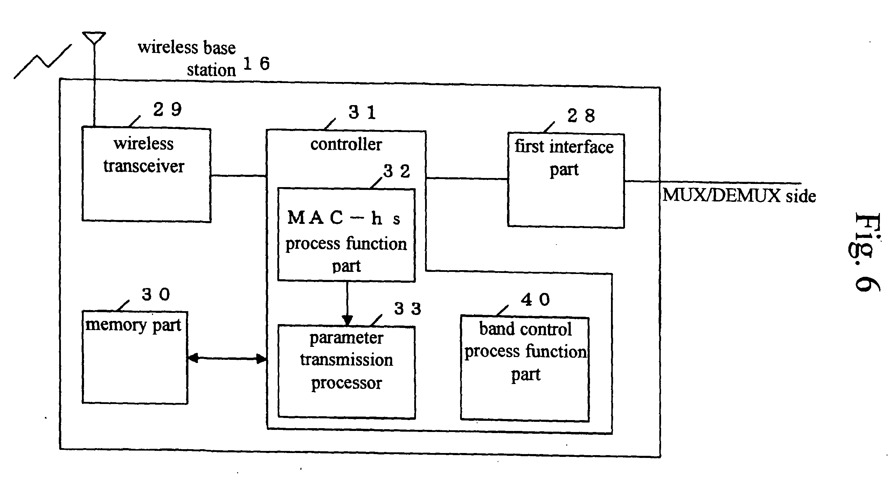

Figure 6 shows the wireless base stations 16 (BS: Base Station).

In the figure, 29 represents the wireless transceiver for performing transmission and receiving of wireless signals with the mobile station 17, and 28 the first interface part which performs terminal processing of signals from the MUX/DEMUX 14 (15).

31 represents a controller which includes an MAC-hs processing function part 32 for performing MAC-hs processing, i.e., processing of the MAC layer relating to HSDPA.

The controller 31 is provided with a parameter transmission processed part 33, which transmits parameters used in adaptive modulation control performed by the wireless base stations 16 (or parameters used in adaptive modulation control performed by the mobile station 17) to the higher-level devices, and a band control processing function part 40, which performs band control.

Here, the object of band control is, for example, the region with respect to the link (Iub) between the MUX/DEMUXs 14 (15) using the first interface part 28.

30 represents a memory part for storing transmission data for retransmission in order to perform retransmission control by means of the H-ARQ previously explained that is executed with the mobile station 17, and storing transmission data, in a waiting status, to be transmitted by the shared channel HS-PDSCH.

Next, the operation of processing data received from the MUX/DEMUX 14 (15) is explained.

First, the HS-DSCH frame received via the first interface part 28 is input to the control part 31.

The control part 31 then stores the MAC PDUs addressed to the mobile station contained in the HS-DSCH frame received in the memory part 30.

When it has been detected that the transmission of data to the mobile station via that HS-PDSCH which is a shared channel has become possible, the multiple MAC PDUs addressed to that mobile station are extracted in order from the memory part 30, and a MAC-hs PDU containing multiple MAC PDUs is generated. The number of MAC PDUs extracted is selected so that it can be held within the transport block size determined by the CQI information, etc.

The MAC-hs PDU forms one transport block and constitutes the source of data transmitted via the HS-PDSCH to the mobile station 17.

The MAC-hs PDU contains a TSN (Transmission Sequence Number), a sequence number attached to each MAC-hs PDU, and even when transmission of the HS-PDSCH to the mobile station 17 is performed divided into multiple processes, the transport block can be rearranged in accordance with this sequence number.

In order to perform second retransmission control by H-ARQ, the MAC-hs PDU generated in the control part 31 is stored in the memory part 30 and is also transmitted from the wireless transceiver 29 to the mobile station 17 via the HS-PDSCH.

As explained above, before transmission of the HS-PDSCH, transmission warning (notification) is given to the mobile station 17 subject to transmission via the HS-SCCH.

By receiving the transmission warning (notification) via the HS-SCCH, the mobile station 17 that has received the HS-PDSCH sends receiving results (NACK signal) of the HS-PDSCH via the HS-DPCCH.

When the MAC-hs processing function part 32 of the wireless base station 16 detects that the receiving result is a NACK signal, it reads from the memory part 30 the MAC-hs PDU transmission of which has failed, provides this to the wireless transceiver 29 and performs retransmission.

On the other hand, when the receiving result of HS-PDSCH is an ACK signal, since retransmission control is unnecessary, the MAC-hs process function part 32 performs control so as to read the unsent MAC PDUs stored in the memory part 30 to be transmitted as the next new transport block and generate and transmit a new MAC-hs PDU.

The foregoing is the operation relating to H-ARQ in the wireless base station, but as explained above, in HSDPA in order to perform adaptive modulation control CQI information is received regularly from the mobile station 17 by the wireless base station 16.

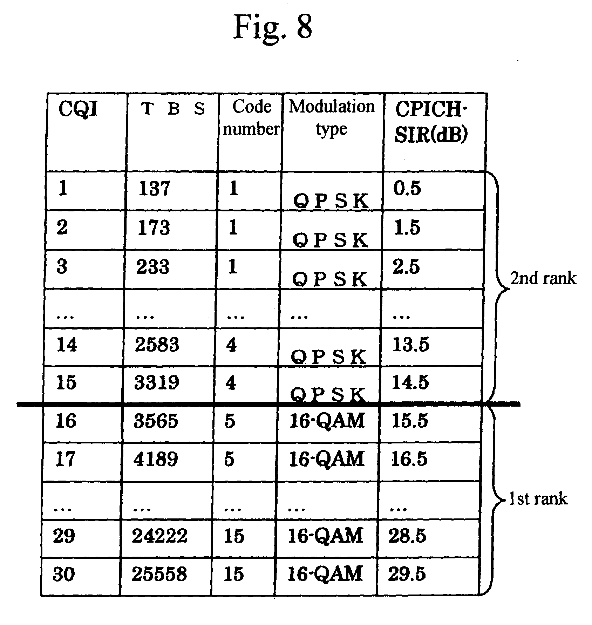

Figure 8 shows a CQI table in which the mobile station 17 uses the SIR (Signal to Interference Ratio) of a CPICH for selecting the CQI.

As shown in the diagram, the table defines the corresponding relationships among the TBS (Transport Block Size) bit number, code number, modulation type and CPICH-SIR with respect to the respective CQI information units 1 through 30.

Here, the TBS bit number indicates the number of bits transmitted within 1 subframe, the code number indicates the number of spreading codes used in HS-PDSCH transmission, and the modulation type indicates that either QPSK or 16-QAM is used for transmission via the HS-PDSCH.

As is apparent from the figure, the more desirable the SIR of the CPICH becomes (the greater the value of the SIR), the greater the CQI value becomes. As the CQI increases in size, the corresponding TBS bit number and spreading code number increase, and the modulation scheme switches to a 16-QAM modulation scheme, so it can be seen that, ultimately, the better the SIR, the faster the transmission speed becomes.

The table shown in the figure, as explained below, is stored in a memory part 36 held by the mobile station 17.

The mobile station 17 measures the SIR of the CPICH during a receiving environment measurement interval, references the stored table, specifies the CQI corresponding to the SIR measured, and sends this to the wireless base station 16.

The parameter transmission processor 33 of the wireless base station 16 then transmits the CQI information received from the mobile station, in sequence and without any further processing, to the wireless base station control or 12 (13) or core network 11.

The CQI information, rather than being transmitted without any further processing, may also be transmitted as parameter information after converting the CQI information using a predetermined function (parameter=F(CQI)).

For example, CQI information received from the mobile station 17 may be individually averaged n times (where n is 1, 2 or another larger natural number), and transmitted after being converted into information indicating to which ranked among the ranks subdivided in two stages the average value belongs.

As the standard for subdivision, a system whereby the CQI value as selected by the hexadecimal QAM as adaptive modulation show in Figure 8 may be defined as the first rank and the CQI values selected by QPSK as adaptive modulation may be defined as the second rank is conceivable.

This is because the respective transmission speeds greatly change according to hexadecimal QAM and QPSK.

Accordingly, if the CQI value received from the mobile station 17 is 16 to 30, "1," which indicates the first rank (high speed), is transmitted by the parameter transmission processor 33 as information relating to parameters used in adaptive modulation control, and if the CQI value is 1 to 15, the parameter transmission processor 33 transmits "0," indicating a second rank (low-speed), as information relating to parameter is used in adaptive modulation control.

More specifically, division may be performed using the TBS bit number as a standard or by the code number units, the affiliated subdivision determined, and the parameter transmission processor 33 may transmit that information.

Further, this calculation may be performed with respect to each mobile station, and the number of mobile stations belonging to the first rank and the number of mobile stations belonging to the second rank transmitted as CQI assembled information.

By using assembled (summary) information in this way, the amount of data may decrease in becomes easier to use in control on the higher-level device side. Moreover, the transmission frequency can be reduced merely by transmitting the assembled (summary) information to the higher-level device side placing the CQI information received by the same first and second slots in a batch (as a set).

The wireless base station control or 12 (13) or core network 11 can perform each type of control based on information received from the parameter transmission processor 33.

### • "Mobile Station 17"

Next, the configuration and operation of the mobile station are explained.

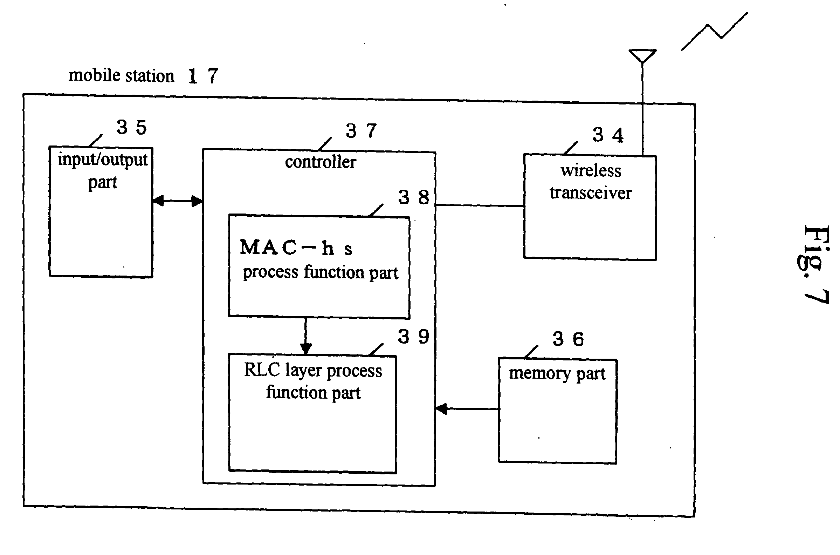

The constitution of the mobile station 17 is shown in Figure 7. In the figure, 34 represents the wireless transceiver for performing wireless communication with the wireless transceiver 29 of the wireless base station 16, and 35 represents the input/output part which inputs sounds, data and the like and outputs received sounds and data.

36 is a memory part, which stores data required for various purposes, and is used for temporary storing of data that constitutes receiving errors in order to realize the H-ARQ.

37 represents a control part, which controls each part, and is provided with an MAC-hs process function part 38 and an RLC layer process function part 39, which performs higher-layer processing.

The MAC-hs processing function part 38, when a CRC error is detected with respect to the transport block received, generates an NACK signal, and when no CRC error is detected generates an ACK signal. It also performs a reordering process (reordering) based on the TSN contained in the MAC-hs PDU obtained by decoding, and transfers data after reordering to the RLC layer processing function part 39, which performs upper layer processing.

The RLC layer processing function part 39 determines whether there is any disorder in the number sequence contained in the MAC PDU and determines what is out of sequence.

Accordingly, in the mobile station 17, when notification is given by the HS-SCCH that transmission of data will be made to mobile local station via the HS-PDSCH, a subframe of the HS-PDSCH after 2 slots is received, and is modulated and decoded (turbo-decoded). Thereby decoding results are obtained, it is determined whether or not to perform a receiving by CRC calculation using a CRC bit, and if not, the received data is stored in the memory part 36, and an NACK signal is transmitted to the wireless base station 16 via the HS-DPCCH based on control by the MAC-hs processing function part 38.

Next, when retransmission is performed by the wireless base station 16, after the stored data in the memory part 36 and retransmitted data have been combined, they are decoded (turbo-decoded), and a CRC check is again run on the decoded data.

If deemed permissible by the CRC check, the MAC-hs processing function part 38 performs control so that an ACK signal is transmitted to the wireless base station 16 via the HS-DPCCH.

Next, the MAC-hs processing function part 38 performs a reordering process (reordering) based on the TSN contained in the MAC-hs PDU obtained by decoding, and transfers the MAC PDU (RLC PDU) contained in the transport block after reordering to the upper-layer RLC processing function part 39.

The RLC processing function part 39 performs reordering using sequence numbers contained in the MAC PDU (RLC PDU), detects numbers out of sequence, and performs a polling bit check.

Here, if a number out of sequence has been detected, the RLC processing function part of the mobile station 17 transmits an NACK signal for retransmission control to the wireless base station controller 12 (13) via an independently established dedicated physical channel (DPCH).

The ACK or NACK signal the transmission of which is controlled by the RLC process function part 39 of the mobile station 17 is transmitted to the wireless base station controller 12 (13) via the wireless base station 16 and MUX/DEMUX 14 (15).

The control part 22 of the wireless base station controller 12 (13) upon receiving an NACK signal from the RLC layer processor 39 of the mobile station 17, based on a retransmission control process, reads the retransmission data (HS-PDSCH frame) to be retransmitted from the memory part and performs retransmission.

While receiving HSDPA service, the mobile station feeds back CQI information for adaptive modulation control at regular intervals to the base station using the second and third slots of the HS-DPCCH. For example, the transmitted CQI information can be calculated based on the receiving environment (e.g., the SIR measurement results of CPICH) during the interval from 4 slots to 1 slot before CQI transmission.

### (b) Explanation of Embodiment 2

In Embodiment 1, by providing the wireless base station with a function of transmitting information relating to parameters used in adaptive modulation control to the higher-level device side, the higher-level devices were enabled to comprehend the trends (prediction) of adaptive modulation control, but in this second embodiment, additionally, band control is performed using information relating to these parameters. When the band region is expanded, in addition to the band control explained below, it is possible to perform flow control whereby the priority of the flow is increased.

### • "Band control between the wireless base station controller and MUX/DEMUXs"

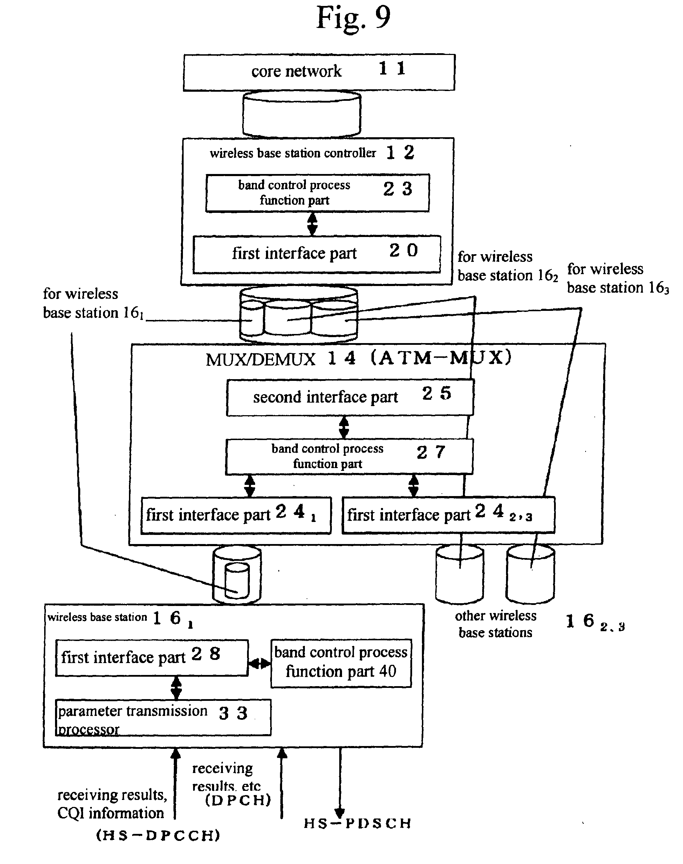

Figure 9 is a diagram explaining the band control between the wireless base station controller and MUX/DEMUXs.

As explained above, the CQI information from a mobile station (or parameter information used in adaptive modulation in the mobile station) is transmitted to the wireless base station controller 12 from the parameter transmitting processor 33 of the wireless base station 16₁ via the MUX/DEMUX 14.

The band control process function part 23 of the wireless base station controller 12, jointly with the band control process function part 27, using parameter information (CQI information or assembled CQI information may also be used) received, performs control whereby the band used for the wireless base station 16₁ between the first interface part 20 and second interface part 25 is changed.

Explained in more detail, when, based on parameter information, a wireless environment with a mobile station in an HSDPA service within the wireless zone of a wireless base station 16₁ is judged to be better than a specified standard, and can be assumed that high-speed transmission will be performed based on adaptive modulation control. Thus, a control process is implemented to expand the band region for the wireless base station 16₁ between the first interface part 20 and second interface part 25.

Naturally, the control process for expanding the band region in the implemented when, in consideration of the number of mobile stations, the number of mobile stations in which the wireless environment is better than the specified standard has exceeded a specified number.

It is also possible to compare parameter information from the wireless base station 16₁ and other wireless base stations 16₂ and 16₃ under within the share of control of the wireless base station controller 12 and to allocate bands more widely with respect to wireless base stations in which a larger number of mobile stations having a good wireless environment exist.

In the example shown in the figure, assuming:

Wireless base station 16₁: first rank mobile station number = 2, second rank mobile station number = 1

Wireless base station 16₂: first rank mobile station number = 4, second rank mobile station number = 1

Wireless base station 16₃: first rank mobile station number = 5, second rank mobile station number = 0

referring to the band image diagram in Figure 9, it can be seen that the wireless base station 161 having the fewest number of first rank mobile stations is allocated a narrower band region than the other wireless base stations.

Preferably, the transmission rates corresponding to the CQI value of mobile station 17i (where "i" represents a mobile station identification number) is made xi, Σxi is calculated for each wireless base station, and allocation is performed so that the allocated band regions are proportional to Σxi. Here, it is desirable that the mobile station 17i be limited to mobile stations under the control of the wireless base station controller 12 where in the wireless base station controller 12 is an S-RNC for the mobile station 17i.

Naturally, until the ratio of Σxi is changed by predetermined value so that the band region will not be changed excessively, so-called hysteresis control should be applied so that change in the band is not controlled.

By similarly linking the band control process function part 27 and band control process function part 40, in conjunction with the band control explained above, it is desirable to perform band control of the links (Iub) between the first interface part 24₁ of the MUX/DEMUX 14 and the first interface part 28 of the wireless base station 16₁.

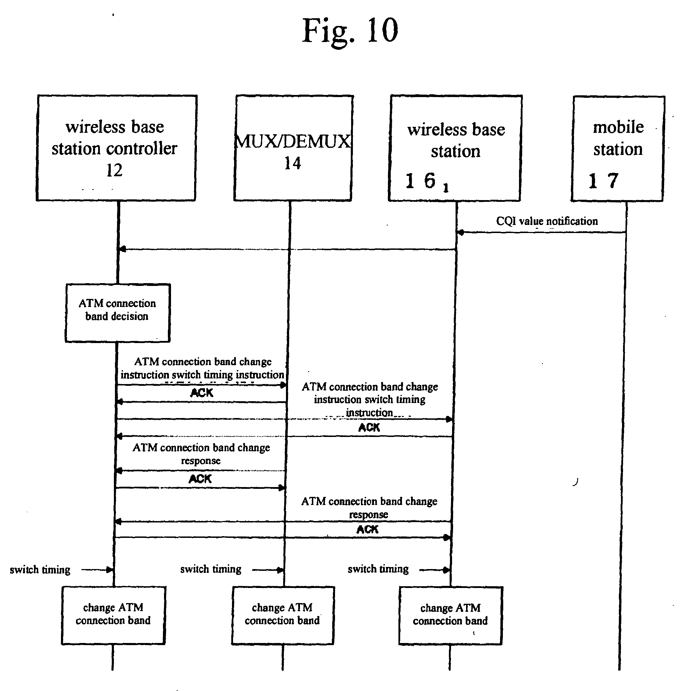

Figure 10 shows an example of a sequence for band (width) modification.

It is assumed that the wireless base station 16 and demultiplexer 13 are connected by ATM connection.

The wireless base station 16₁, which has received notification of the CQI value from the mobile station 17, transmits the CQI value (or assembled CQI values) via the MUX/DEMUX 14 to the wireless base station controller 12.

The wireless base station controller 12, in accordance with the CQI value received, determines the band (width) with the MUX/DEMUX 14 for the wireless base station 16₁ and transmits to the MUX/DEMUX 14 ATM connection band changing instructions and switching time instructions.

Similarly, the wireless base station controller 12 transmits to the wireless base station 16₁ ATM connection band changing instructions and switching time instructions.

The MUX/DEMUX 14 and the wireless base station 16₁, upon receiving these instruction signals, transmits an ACK signal, and then transmits the ATM connection band update response to the wireless base station controller 12.

The wireless base station controller 12, by transmitting an ACK in response, causes the demultiplexer 14 and wireless base station 16₁ to implement changing of the communication band with respect to the ATM connection (wireless base station controller 12, demultiplexer 13, wireless base station 161) in the switching timing previously indicated.

### • "Band control between wireless base station controllers"

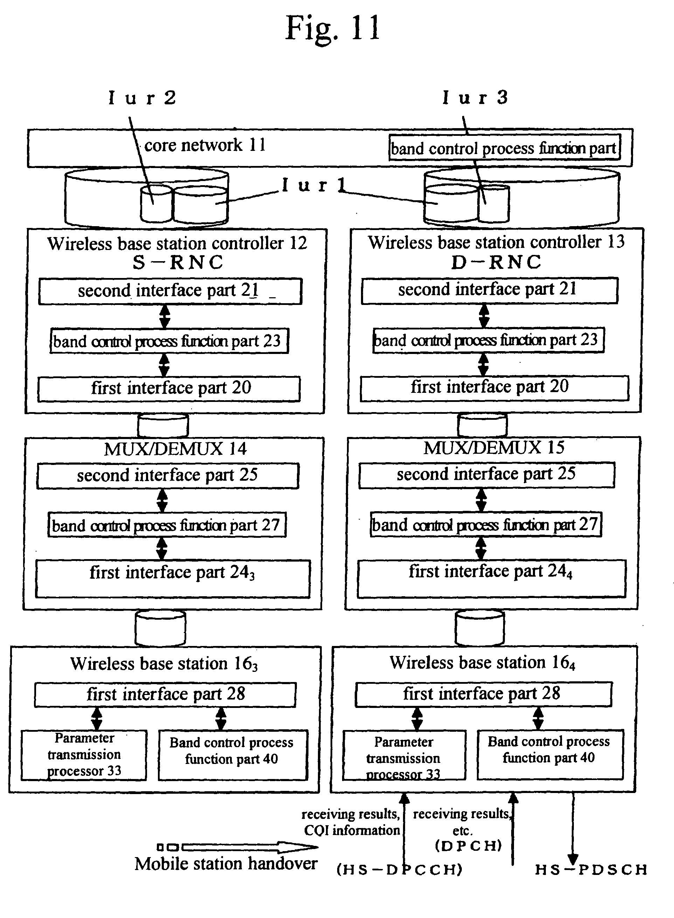

Figure 11 is a diagram explaining band control between RNCs.

When the mobile station 17 moves from a wireless zone formed by the wireless base station 16₃ to a wireless zone formed by the wireless station 16₄, handover processing is performed as described above.

After handover, signals from the mobile station 17 are forwarded from the drift RNC 13 to the serving RNC (S-RNC) 12, and signals are delivered from the serving RNC (S-RNC) 12 to the core network 11.

Transmission of data between the D-RNC 13 and S-RNC 12 is performed via an Iur, but if this Iur is a path (Iur1) via a core network, it shares a link with other Iur's.

For example, in Figure 11, in the S-RNC 12, the Iur1 is an Iur link with the D-RNC 13, and Iur2 is an Iur link with another RNC, so common links are shared by band division.

On the other hand, in the D-RNC 13, the Iurl is an Iur link with the S-RNC 12, the Iur3 is an Iur with another RNC, so common links are shared by band division.

Accordingly, when the mobile station 17 has moved from under the control of the S-RNC 12 to that of another RNC, the amount of data transmitted via the Iurl that is the link between the S-RNC 12 and D-RNC 13 is increased.

In this embodiment, the band control of this Iur is performed.

Specifically described, CQI information from the mobile station 17 (or parameter information used in adaptive modulation in the mobile station) is transmitted to the S-RNC 12 from the parameter transmission processor 33 of the wireless base station 16₄ via the demultiplexer 15, D I RNC 13 and core network 11.

The band control process function part 23 of the S-RNC 12, jointly with the band control process function 23 of the D-RNC, using parameter information (CQI information or assembled CQI information may be used) received, performs control so as to change the band (width) of the Iur1 which is the link between the second interface part 21 of the S-RNC 12 and the second interface part 21 of the D-RNC 13.

Specifically, as a result of handover, based on parameter information regarding the mobile station that has made RNC 12 an S-RNC, RNC 13 a D-RNC, and is located in a region under the control of the D-RNC 13, when expansion of the band used by the Iurl is contemplated, control is implemented so that the band of the Iurl is expanded by controlling the second interface part 21 of the S-RNC 12 and the second interface part 21 of the D-RNC 13.

Of course, control can be performed so as to widen the band when the number of mobile stations in which the wireless environment is better than a specified standard, considering the number of mobile stations (the number of mobile stations which have made the RNC 12 an S-RNC and 13 a D-RNC).

It is also desirable to consider mobile stations where the position of RNCs 12 and 13 is reversed, i.e., where RNC 12 becomes the D-RNC and RNC 13 the S-RNC.

This is because the amount of data that can be transmitted via the Iurl link ultimately is affected when either RNC 12 or 13 is an S-RNC.

Thus, in the following example, the band control process function part 23 of the RNC 12 and the band control process function 23 of the RNC 13 performed band control on the Iur 1 based on CQI information of mobile stations that have made the RNC 13 their serving RNC, received from the parameter transmission processor 33 of the wireless base stations 16₁ through 16₃ under the control of the RNC 12, and CQI information of mobile stations that have made the RNC 12 their serving RNC, received from the parameter transmission processor 33 of the wireless base stations 16₄ and 16₅ under the control of the RNC 13.

The cases shown in the illustrated examples concern:
mobile stations which have made the serving RNC and drift RNC pair the pair of RNC 12 and 13 (the Iur uses an Iur1) (number of first rank mobile stations = 5, number of second rank mobile stations = 1),
mobile stations which have made the serving RNC and drift RNC pair the pair of RNC 12 and another RNC (the Iur uses an Iur2) (number of first rank mobile stations = 1, number of second rank mobile stations = 1), and
mobile stations which have made the serving RNC and drift RNC pair the pair of RNC 13 and another RNC (the Iur uses an Iur3) (number of first rank mobile stations = 1, number of second rank mobile stations = 2). The band width allocated to the Iur1 is wider than the band width allocated to Iur2 (Iur3).

Preferably, the transmission rates corresponding to the CQI value of mobile station 17i is made xi, Σxi is calculated for each wireless base station, and allocation is performed so that the allocated band regions are proportional to Σxi.

Naturally, until the ratio of Σxi is changed by predetermined value so that the band region will not be changed excessively, so-called hysteresis control should be applied so that change in the band is not controlled.

In conjunction with the band control described above, it is desirable for the band control processor 23, band control processor 27 and band control processor 40 to perform the band control of the band of the Iub link in cooperation.

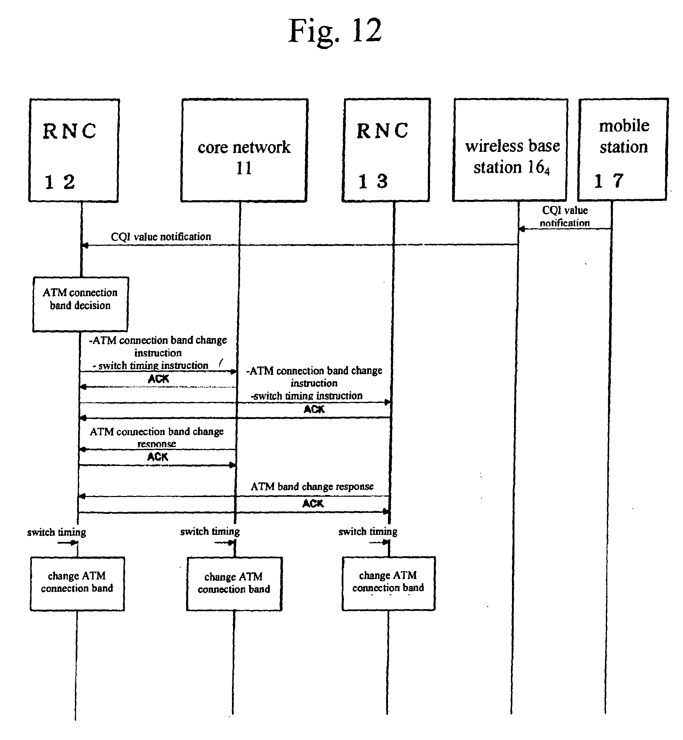

Figure 12 shows an example of a sequence for band (width) modification.

The wireless base station controllers 12 and 13 and core network 11 are connected by ATM connection.

The wireless base station 16₄ (16₅) which has received notification of the CQI value from the mobile station 17 which has made the RNC 12 its S-RNC transmits the CQI value (or assembled CQI values) to the RNC 12 via the MUX/DEMUX 15, RNC 13, and core network 11.

The RNC 12, based on the CQI information from the wireless base stations 16₄ and 16₅ under control of the RNC 13, and CQI information from mobile stations which have made the RNC 13 their S-RNC received from wireless base stations 16₁ through 16₃ under the control of the RNC 12, in accordance with the algorithm previously indicated, determine the band of the Iurl with the RNC 13 and transmit ATM connection band modification instructions and switching time instructions to the core network I 1 and RNC 13.

The core network 11 and RNC 13 upon receiving these instructions signals, return an ACK signal and thereafter transmit an ATM connection band modification response to the RNC 12.

The RNC 12, by transmitting the ACK in response, cause the core network 11 and RNC 13 to change band with respect to the ATM connection (Iur1) in the switching timing previously indicated.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

Embodiments of the present invention may be implemented in hardware, or as software modules running on one or more processors, or on a combination thereof. The invention may also be embodied as one or more device or apparatus programs (computer programs and computer program products) for carrying out part or all of any of the methods described herein. Such computer programs embodying the present invention may be stored on computer-readable media, or could, for example, be in the form of one or more signals. Such signals may be data signals downloadable from an Internet website, or provided on a carrier signal, or in any other form.

## Claims

1. A mobile communication system wherein adaptive modulation control is executed between a mobile station and a wireless base station, comprising
a transmission processor operable to transmit information relating to parameter used in the adaptive modulation control to a higher-level device of the wireless base station.

2. A mobile communication system according to Claim 1, wherein the adaptive modulation control is applied to signals transmitted by the wireless base station to the mobile station.

3. A mobile communication system according to Claim 1 or 2, wherein the adaptive modulation control is applied to signals transmitted by the mobile station to the wireless base station.

4. A mobile communication system according to any one of Claims 1 to 3, wherein the information relating to parameters is information obtained by aggregation of each parameter used in adaptive modulation control performed among a plurality of different mobile stations.

5. A mobile communication system according to any one of claims 1 to 4, wherein the higher-level device comprises a band control part operable to perform band control using the parameter.

6. A mobile communication system according to Claim 5, wherein:
the higher-level device comprises a MUX/DEMUX and wireless base station controller; and
the object of the band is the link between the wireless base station controller and MUX/DEMUX, which is shared by a plurality of wireless base stations.

7. A mobile communication system according to Claim 5, wherein:
the higher-level device comprises a plurality of wireless base station controllers and a core network; and
the object of the band control is the link between the plurality of wireless base station controllers via the core network and is a link shared by the plurality of wireless base station controllers.

8. A mobile communication system which is HSDPA-compatible, comprising:
a transmission processor operable to transmit CQI information received from a mobile station to a higher-level device.

9. A mobile communication system according to Claim 8, wherein the mobile communication system further comprises:
a MUX/DEMUX arranged between a plurality of wireless base stations and one RNC, and
a band controller operable to control bands between the RNC and the MUX/DEMUX based on the CQI information.

10. A mobile communication system according to Claim 8, wherein the mobile communication system further comprises:
a plurality of RNCs; and
a band controller operable to perform band control on an Iur interface between RNCs based on the CQI information.

11. A mobile communication system which is HSDPA-compatible, comprising:
a transmission processor operable to transmit CQI information which is received by a wireless base station under the control of a drift RNC to a serving RNC.

12. A mobile communication system according to Claim 11, wherein:
the serving RNC comprises a band controller operable to perform band control between the serving RNC and the drift RNC based on the received QCI information.

13. A wireless base station used in an HSDPA-compatible mobile communication system, comprising:
a transmission processor operable to transmit QCI information received from a mobile station to a higher-level device.

14. A wireless base station comprising:
a measurement device operable to measure reception quality based on received signals from a mobile station and to transmit parameters used in adaptive modulation control to the mobile station in accordance with the measurement result; and
a transmission processor operable to transmits information relating to the parameter to a higher-level device.
